# EUROPEAN PATENT APPLICATION

(11) **EP 2 053 849 A2**
(43) Date of publication of application: **29.04.2009**
(21) Application number: 07120306.1
(22) Date of filing: 08.11.2007
(51) Int. Cl.: H04N 5/44

(54) **Method of sorting broadcast channels and disply device using the same**

(30) Priority: 23.10.2007 KR 20070106716
(71) Applicant: LG Electronics Inc., Yeongdeungpo-gu Seoul 150-721 (KR)
(72) Inventor: Park, Jae Hyun, Gum-si, Gyeongsangbuk-do (KR); Hwang, Kyong Soo, Gum-si, Gyeongsangbuk-do (KR)
(74) Representative: Cabinet Plasseraud

(57) **Abstract**

A method of sorting broadcast channels and a display device using the same enables a sorted broadcast channel search list to be edited for use in channel searching. The method includes steps of receiving a broadcast signal including broadcast station information corresponding to a plurality of broadcast channels; detecting broadcast station information for each broadcast channel; searching, with reference to a lookup table, for a priority of each broadcast channel corresponding to the detected broadcast station information; generating a user interface device including a broadcast channel search list arranged in the lookup table in accordance with the searched priority, the user interface device receiving from a user an editing command corresponding to at least one broadcast channel of the broadcast channel search list; editing the broadcast channel search list according to the received editing command; sorting the plurality of broadcast channels based on the edited broadcast channel search list; and storing the sorted broadcast channel search list in correspondence to the detected broadcast station information.

## Description

This application claims the benefit of Korean Patent Application No. 10-2007-0106716, filed on October 23, 2007, which is hereby incorporated by reference as if fully set forth herein.

### BACKGROUND OF THE INVENTION

### Field of the Invention

The present invention relates to video display devices such as digital television receivers, and more particularly, to a method of sorting broadcast channels and a display device using the same. Although suitable for a wide range of applications, the present invention is particularly suitable for editing a searched broadcast channel list using broadcast station information included in a received broadcast signal.

### Discussion of the Related Art

A video display device including a tuner, such as a digital television receiver, may be provided with a channel search function whereby the display device automatically searches a next broadcast channel according to a preset priority. For example, when a user changes the tuned channel using an up/down key of a remote controller, the television receiver tunes to the next channel based on a corresponding value of a set of channel priority values stored in a memory's lookup table. The priority values determine the sequence of channel selection and are typically set by the manufacturer to define a channel search sequence. The sequence most often corresponds directly to the relative frequency of available broadcast channels.

Meanwhile, a broadcast signal transmitted by a broadcast station typically includes broadcast station information for channel identification. When tuning to a specific channel, the television receiver recognizes the broadcast station based on the broadcast station information of the tuned broadcast signal. In other words, the broadcast station information enables channels to be searched from the received broadcast signal according to a predetermined sequence defined by the priority values stored in the lookup table.

Accordingly, based on the broadcast station information contained in a received broadcast signal and stored in correspondence to a predefined set of priority values, the user of a contemporary display device may create a channel search list for facilitating channel selection. By indexing the channel search list based on the priority values set by the manufacturer, a desired broadcast channel may be selected by referring to the lookup table and tuning to the next channel of the channel search sequence. An exemplary channel search list is shown in Table 1.

**Table 1**

| information set by manufacturer | | | information set by user |
|---|---|---|---|
| priority | broadcast station information | | channel search list |
| 0 | 1st broadcast station name | | 1st broadcast station name |
| 1 | 2nd broadcast station name | | -- |
| 2 | 3rd broadcast station name | | 3rd broadcast station name |
| 3 | 4th broadcast station name | | 4th broadcast station name |
| 4 | 5th broadcast station name | | 5th broadcast station name |
| 5 | 6th broadcast station name | | -- |
| . | . | | . |
| . | . | | . |
| . | . | | . |
| | | | |

Referring to Table 1, the broadcast station information is arranged in the lookup table in correspondence to a channel search sequence, namely, the priority of a corresponding channel as determined by the manufacturer. The same broadcast station information is also used in creating the channel search list. Thus, channels are searched by comparing the broadcast station information of a tuned broadcast signal to the information stored in the lookup table by the manufacturer. After sorting, the search results may be output to a display screen to enable user recognition. The sorted search results may be displayed in the form of a channel search list as in Table 1.

This sorting of channel search results, however, which is performed based on a search of channels using a preset channel selection sequence, i.e., in accordance with a predefined priority, represents an inconvenience to the user by impeding the creation of channel search lists. That is, in the event that a user is dissatisfied with the priority as defined by the manufacturer, the user will be unable to create a most preferred channel search list.

### SUMMARY OF THE INVENTION

Accordingly, the present invention is directed to a method of sorting broadcast channels and a display device using the same that substantially obviates one or more problems due to limitations and disadvantages of the related art.

An object of the present invention is to provide a method of sorting broadcast channels and a display device using the same, by which a sorted broadcast channel search list can be edited for use in channel searching.

Another object of the present invention is to provide a method of sorting broadcast channels and a display device using the same, which enables a user to edit and use a channel search list sorted according to user-specific information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages in accordance with the purpose of the invention, as embodied and broadly described herein, there is provided a method of sorting broadcast channels in a display device. The method comprises receiving a broadcast signal including broadcast station information corresponding to a plurality of broadcast channels; detecting broadcast station information for each broadcast channel; searching, with reference to a lookup table, for a priority of each broadcast channel corresponding to the detected broadcast station information; generating a user interface device including a broadcast channel search list arranged in the lookup table in accordance with the searched priority, the user interface device receiving from a user an editing command corresponding to at least one broadcast channel of the broadcast channel search list; editing the broadcast channel search list according to the received editing command; sorting the plurality of broadcast channels based on the edited broadcast channel search list; and storing the sorted broadcast channel search list in correspondence to the detected broadcast station information.

The user interface device of the present invention further includes a sort button for inputting to the user interface device a user command for deactivating a set of editing buttons. Thus, when detecting broadcast station information of another plurality of broadcast channels, the user command input by the sort button prevents editing of the broadcast channel search list by locking (confirming) the sorted broadcast channel search list until the broadcast station information of the another plurality of broadcast channels is detected. Therefore, once an edited channel search list is created and stored, the method of the present invention is effectively performed anew to generate a new set of broadcast station information, thereby unlocking the editing functions by reactivating the editing buttons and ensuring that the correspondingly stored broadcast station information will remain effective for subsequent tuner operation

According to another aspect of the present invention, there is provided a display device suitable for implementing the above method.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a display device according to the present invention;

FIG. 2 is a flowchart of a method of sorting broadcast channels in a display device according to the present invention; and

FIG. 3 is a exemplary diagram of a user interface according to the present invention.

### DETAILED DESCRIPTION OF THE INVENTION

Reference will now be made in detail to exemplary embodiments of the present invention, examples of which are illustrated in the accompanying drawings. Wherever possible, like reference designations will be used throughout the drawings to refer to the same or similar parts.

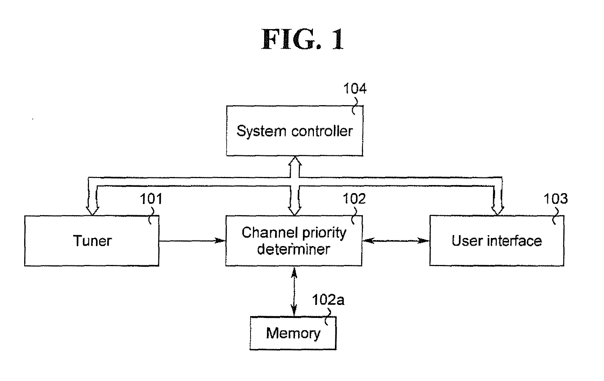

Referring to FIG. 1, a display device according to the present invention includes a tuner 101 for receiving a broadcast signal including broadcast station information; a channel priority determiner 102 for detecting broadcasting station information from the received broadcast signal and for searching, with reference to a first lookup table stored in a memory 102a, for a priority of a broadcast channel corresponding to the detected broadcast station information; a user interface 103, and a system controller 104 for controlling the display device based on user inputs to the user interface, a channel priority determination, and a current channel search list. The user interface 103 maybe in the form of an inter-operative screen of the display device by which a user menu including icons and a cursor is displayed and controlled (manipulation) by the user via, for example, a remote controller and by which the user is provided with information indicative of a channel search list stored in the memory 102a. Thus, in addition to a channel search list sorted in accordance with a searched priority, the user menu may include a set of editing buttons and a sort button. The editing buttons may include an add button for adding a designated channel to the currently stored channel search list, a move button for moving a designated channel within the currently stored channel search list, and a delete button for removing a designated channel from the currently stored channel search list.

Accordingly, under control of the system controller 104, the user interface 103 provides for the creation, editing, and output (display) of a user interface device, namely, the user menu, to thereby enable user control of a display device according to the present invention by receiving channel search list editing commands generated in response to a user manipulation of one or more of the editing buttons. The user interface 103 thus enables a channel search list to be edited. In response to a user manipulation of the sort button, the user interface 103 further enables the editing buttons to be deactivated, whereupon the edited channel search list is stored in the memory 102a, so that channels may be searched according to the currently stored channel search list.

The first lookup table includes information set by the manufacturer as well as broadcast station information stored according to a current channel search list, thereby determining a priority for channels of each broadcast station. The priority values of the first lookup table may be initially set according to broadcast channel frequency or according to another sequence as determined by a manufacturer and may be arranged in a reversed sequence of any stored set of values. Also, according to the present invention, priority per the first lookup table may be set based on a corresponding channel's frequency of use.

In addition to the first lookup table, the memory 102a may further store a second lookup table, in which channel priorities are alternatively set based on additional reference information. In response to a user selection of the reference information, the channel priority determiner 102 may set a flag indicating which of the first lookup table or the second lookup table is to be used in channel searching. In the event that the second lookup table is used, a further selection may be made to determine a specific channel priority of the second lookup table. In this case, any type of information enabling a specific sorting of channels will suffice as the reference information. For example, the reference information may include at least one indication of a specific user, the user's location (e.g., a country or region), a preferred or default language, or specified demographic information such as age, religion, or gender, and the further selection for the second lookup table may be made by the user inputting the reference information via the user interface 103 or may be performed automatically in accordance with a prestored algorithm.

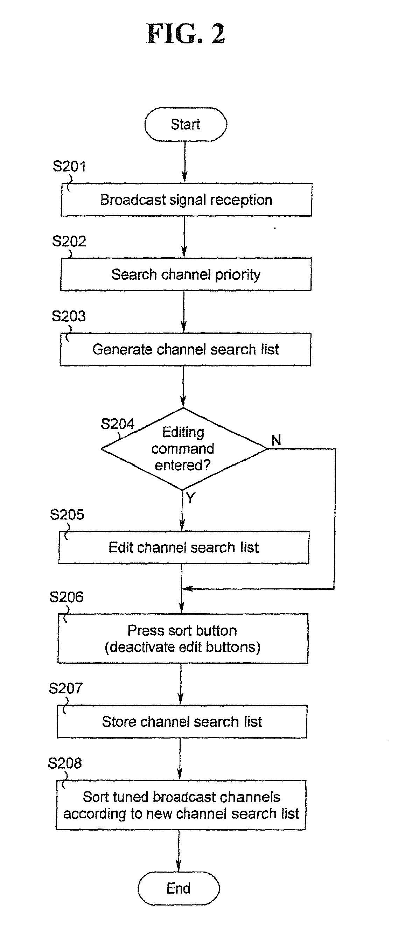

Referring to FIG. 2, illustrating a method of sorting broadcast channels in a display device according to the present invention, the tuner 101 of the display device receives a broadcast signal (S201). The broadcast signal includes broadcast station information for identifying each broadcast channel available to the display device. Here, the broadcast station information can be included as a coded pilot signal in the broadcast signal. Although the frequency of a broadcast signal may differ per a channel, a coded pilot signal can be included in a broadcast signal according to a predetermined reference in common to each channel. In any event, the display device according to the present invention is able to read and detect broadcast station information inserted in a prescribed section of the broadcast signal.

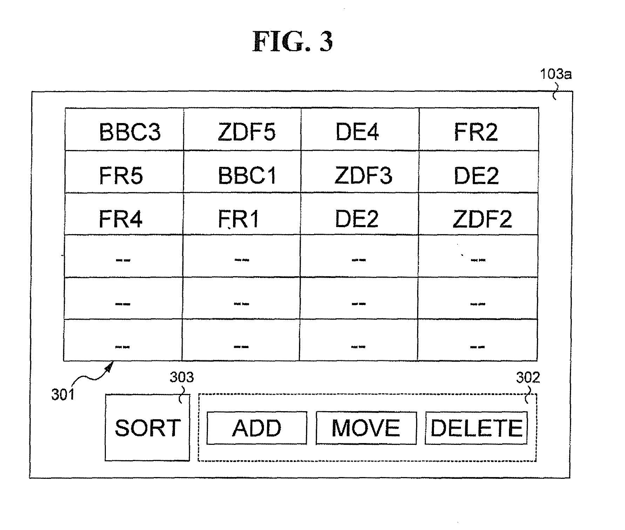

The display device detects the broadcast station information from the received broadcast signal and searches the priority corresponding to the detected broadcasting station information (S202). In doing so, the channel priority determiner 102 searches the corresponding channel priority by referencing the first lookup table, which stores broadcast station information by its corresponding priority and may initially (i.e., before editing) correlate to the lookup table of Table 1. To generate user interface information, e.g., on-screen display (OSD) data including a channel search list, the display device searches broadcast station information of all broadcast signals by incrementing command data received by the tuner. The display device then outputs the generated user interface information using an OSD display for enabling functions of the user interface 103 (S203). An example of an OSD display screen 103a for user interface is shown in Figure 3.

As shown in FIG. 3, the display device generates a channel search list 301 sorted in accordance with a priority determined according to the present invention and displays an active search list together with the user menu (text, icons, etc.) of the user interface 103. Accordingly, the user interface 103 of the present invention includes a set of editing buttons 302 as inputs provided in conjunction with an active (current) output of the channel search list 301, which may be edited using the editing buttons. The user interface 103 may include a sort button 303 arranged with the add, move, and delete buttons.

Referring again to FIG. 2, to edit the channel search list 301, after designating (e.g., highlighting) at least one broadcast channel, for example, by a user selection from the channel search list 301, it is determined whether an editing command is entered via the user interface 103 (S204). If so, current channel search list is edited with respect to the designated broadcast channel or channels (S205). Here, by pressing the add or delete button, a corresponding channel is added to or removed from the beginning or end of the channel search list. A designated channel may be moved, to establish an altogether new priority, using the move button in conjunction with further selections from a display area of the channel search list 301. The user may press the sort button 303 after completion of an instance of editing, at which time the editing buttons 302 may be deactivated to prevent unintentional changes to the channel search list (S206). That is, the sort button 303 of the user interface 103 inputs to the user interface device a user command for deactivating the editing buttons 302.

In pressing the sort button 303 of the present invention, further editing of the broadcast channel search list is prevented by locking (confirming) the list created according to the step S206 until another plurality of broadcast channels is received and corresponding broadcast station information can be detected. In other words, once an edited channel search list is created and stored, the process of FIG. 2 must be performed anew to generate a new set of broadcast station information, which will unlock the editing functions by reactivating the editing buttons 302. This ensures that the correspondingly stored broadcast station information remains effective for subsequent tuner operation.

Thus, in response to an input from the sort button 303, the edited channel search list is stored in the memory 102a (S207). Alternatively, a storing of a new channel search list may be executed at the time of each editing operation. Based on the thus stored channel search list 301, the display device of the present invention is able to search and sort broadcast channels in accordance with an edited channel search list (S208).

A broadcast channel search list edited according to the present invention is exemplified in Table 2. The channel search list of Table 2 is edited from the broadcast channel search list sorted according to the first priority lookup table.

**Table 2**

| original information | | | information set by user |
|---|---|---|---|
| priority | broadcast station information (name) | | channel search list (edited) |
| 0 | broadcast station A | | broadcast station H |
| 1 | broadcast station B | | broadcast station B |
| 2 | broadcast station C | | broadcast station C |
| 3 | broadcast station D | | broadcast station D |
| 4 | broadcast station E | | broadcast station J |
| 5 | broadcast station F | | broadcast station A |
| . | . | | . |
| . | . | | . |
| . | . | | . |
| | | | |

Hence, the present invention enables a user to preferably edit a broadcast channel search list sorted with reference to a channel frequency and to use the edited list. Of course, the user may simply choose to use a default search list, which may be defined by the manufacturer or otherwise preset, that is, without performing any editing according to the present invention.

Meanwhile, a user may wish to establish separately a different priority for use with a channel search list per the step S203. Such a priority may be established according to additional reference information. To do so, the second lookup table for setting a channel priority according to the reference information is additionally stored in the memory 102a, thereby enabling a user to select the reference information preferentially and thus determine the lookup table referenced in the step S202 as the second lookup table rather than the first lookup table. For instance, a user may prefer to search channels of a user-specific country (e.g., local channels) only, in which case channels are searched accordingly and a corresponding channel search list is output via the OSD display screen 103a. In this case, the resulting channel search list may be displayed, and edited as desired, in the same manner as described above.

An example of the second lookup table, including channel priority set by the additional reference information according to the present invention, is shown in Table 3. Here, channels are sorted by country.

**Table 3**

| priority | edited channel search list (United Kingdom) | edited channel search list (France) | edited channel search list (Germany) |
|---|---|---|---|
| 0 | 1st broadcast station name | 2nd broadcast station name | 7th broadcast station name |
| 1 | 5th broadcast station name | 3rd broadcast station name | 2nd broadcast station name |
| 2 | 3rd broadcast station name | 4th broadcast station name | 3rd broadcast station name |
| 3 | 4th broadcast station name | 9th broadcast station name | 4th broadcast station name |
| 4 | 2nd broadcast station name | 8th broadcast station name | 8th broadcast station name |
| 5 | 8th broadcast station name | 7th broadcast station name | 1st broadcast station name |
| . | . | . | . |
| . | . | . | . |
| . | . | . | . |
| | | | |

In this case, the display device searches channels sorted by country in correspondence to the selected country or countries and outputs a corresponding broadcast channel search list. That is, according to the present invention, a user may designate more than one country or reference information category. In other words, the user is able to edit and use a channel search list sorted in accordance with information specified by the user himself.

By adopting the present invention, a user may edit a broadcast channel search list sorted in accordance with a channel frequency reference, so that the edited search list may be used for subsequent channel searches by storing the sorted channel search list in a memory. The present invention also provides a broadcast channel search list sorted in accordance with additional reference information, which may be determined by the user and similarly stored, while enabling the same editing and corresponding sorting functions. Hence, the present invention enables the user to edit and use a channel search list sorted according to user-specific information.

It will be apparent to those skilled in the art that various modifications can be made in the present invention without departing from the spirit or scope of the invention. Thus, it is intended that the present invention covers such modifications provided they come within the scope of the appended claims and their equivalents.

## Claims

1. A method of sorting broadcast channels in a display device, the method comprising:
receiving a broadcast signal including broadcast station information corresponding to a plurality of broadcast channels;
detecting broadcast station information for each broadcast channel;
searching, with reference to a lookup table, for a priority of each broadcast channel corresponding to the detected broadcast station information;
generating a user interface device including a broadcast channel search list arranged in the lookup table in accordance with the searched priority, the user interface device receiving from a user an editing command corresponding to at least one broadcast channel of the broadcast channel search list;
editing the broadcast channel search list according to the received editing command;
sorting the plurality of broadcast channels based on the edited broadcast channel search list; and
storing the sorted broadcast channel search list in correspondence to the detected broadcast station information.

2. The method of claim 1, wherein the editing command is generated by pressing at least one button of an add button, a move button, and a delete button.

3. The method of claim 2, wherein the user interface device further includes a sort button for inputting to the user interface device a user command for deactivating the at least one button.

4. The method of claim 3, further comprising:
detecting broadcast station information of another plurality of broadcast channels,
wherein the user command input by the sort button prevents editing of the broadcast channel search list by locking the sorted broadcast channel search list of said storing until the broadcast station information of the another plurality of broadcast channels is detected.

5. The method of claim 1, further comprising:
storing a priority for each broadcast channel in accordance with a user selection of reference information,
wherein, in response to the user selection of reference information, the stored broadcast priorities are referenced in said priority searching.

6. The method of claim 5, wherein the reference information includes at least one indication of a specific user, the specific user's location, a preferred language, and demographic information.

7. The method of claim 1, further comprising:
searching for at least one broadcast channel according to the stored broadcast channel search list.

8. A display device comprising:
a tuner for receiving a broadcast signal including broadcast station information corresponding to a plurality of broadcast channels;
a channel priority determiner for detecting broadcast station information for each broadcast channel and for searching, with reference to a lookup table, for a priority of each broadcast channel corresponding to the detected broadcast station information;
a user interface device including a broadcast channel search list arranged in the lookup table in accordance with the searched priority, said user interface device receiving from a user an editing command corresponding to at least one broadcast channel of the broadcast channel search list and enabling an editing of the broadcast channel search list according to the received editing command; and
a system controller for sorting the plurality of broadcast channels based on the edited broadcast channel search list and for storing the sorted broadcast channel search list in correspondence to the detected broadcast station information.

9. The display device of claim 8, wherein the editing command is generated by pressing at least one of an add button, a move button, and a delete button.

10. The display device of claim 9, wherein said user interface device further includes a sort button for inputting to the user interface device a user command for deactivating the at least one button.

11. The display device of claim 10, wherein said channel priority determiner detects broadcast station information of another plurality of broadcast channels and wherein the user command input by the sort button prevents editing of the broadcast channel search list by locking the sorted broadcast channel search list stored by said system controller until the broadcast station information of the another plurality of broadcast channels is detected.

12. The display device of claim 8, wherein said system controller stores a priority for each broadcast channel in accordance with a user selection of reference information and wherein, in response to the user selection of reference information, the stored broadcast priorities are referenced by said channel priority determiner in priority searching.

13. The display device of claim 12, wherein the reference information includes at least one indication of a specific user, the specific user's location, a preferred language, and demographic information.

14. The display device of claim 8, wherein said system controller searches for at least one broadcast channel according to the stored broadcast channel search list.
